# EUROPÄISCHE PATENTANMELDUNG

(11) **EP 1 837 214 A1**
(43) Veröffentlichungstag der Anmeldung: **26.09.2007**
(21) Anmeldenummer: 07003549.8
(22) Anmeldetag: 21.02.2007
(51) Int. Cl.: B60H 1/00

(54) **Klappe, insbesondere für eine Kraftfahrzeug-Klimaanlage**

(30) Priorität: 21.03.2006 DE 102006013265
(71) Anmelder: Behr GmbH & Co. KG, 70469 Stuttgart (DE)
(72) Erfinder: Hegner, Hilmar, 71364 Winnenden (DE); Kaufenstein, Stefan, 70806 Kornwestheim (DE)

(57) **Zusammenfassung**

Die Erfindung betrifft eine Klappe (1), insbesondere für eine Kraftfahrzeug-Klimaanlage, an der mindestens eine Verclipsungsstelle ausgebildet ist, die durch einen Teil einer Clipsverbindung für das Anbringen eines Bauteils, insbesondere eines Betätigungshebels (5), mittels Verclipsen gebildet ist, wobei ein durch eine dünne Wand (7) gebildeter, eine in der Klappe (1) ausgebildete Durchgangsöffnung verschließender Bereich in der Nähe der Verclipsungsstelle angeordnet ist, und die dünne Wand (7) von einem Ende des anzuclipsenden Bauteils zu durchstoßen ist.

## Beschreibung

Die Erfindung betrifft eine Klappe, insbesondere für eine Kraftfahrzeug-Klimaanlage, gemäß dem Oberbegriff des Anspruches 1.

Bei flexibel verwendbaren Klappen, welche beidseitig im Bereich ihrer Welle eine Verclipsungsstelle für einen Betätigungshebel aufweisen, wovon jedoch nur eine benutzt, die andere aber ungenutzt ist, wird durch die ungenutzte Verclipsungsstelle in der Regel eine undichte Stelle erzeugt, welche, insbesondere bei Kraftfahrzeug-Klimaanlagen, unerwünscht ist, da durch dieselbe Luft ausströmen oder Luft von außen eintreten kann. Diese Nebenluftströmung kann zudem zu unerwünschten Geräuschen führen.

Diese ungenutzte Verclipsungsstelle kann bspw. durch Wechseleinsätze im Werkzeug beispielsweise durch den eingespritzten Kunststoff für die Klappe im Rahmen des Spritzgießens derselben verschlossen werden. Dies führt jedoch zu einem relativ hohen Mehraufwand in Folge der Mehrteile. Ferner sind die fertig gegossenen Klappen nicht mehr flexibel einsetzbar, so dass die Logistik erschwert wird.

Aus der DE 100 56 260 C1 ist ein Verfahren zur Herstellung eines Spritzgussteils aus einem thermoplastischen Kunststoffmaterial mit mindestens einer Ausnehmung mit einer oder mehreren darinliegenden Hinterschneidungen bekannt. Dabei wird in einem ersten Verfahrensschritt ein Spritzgussrohling in einem ersten Formwerkzeug gespritzt, wobei der Spritzgussrohling in der mindestens einen Ausnehmung mit den Hinterschneidungen versehen ist und die mindestens eine Ausnehmung nach außen durch einen Durchbruch im Spritzgussrohling im Bereich der Hinterschneidungen teilweise geöffnet ist. In einem zweiten Verfahrensschritt wird ein Schieber in ein zweites Formwerkzeug als Kern derart in die Ausnehmung eingesetzt, dass der Kern die Hinterschneidungen überdeckt und den Durchbruch einseitig verschließt. Dann wird der Bereich des Durchbruchs mit einem Verschlussmaterial ausgespritzt, so dass nach Entfernen des Schiebers der zur Ausformung der Hinterschneidungen erforderliche Durchbruch im Spritzgussrohling verschlossen ist. Ein derartig hergestelltes Teil kann beispielsweise für Klappen mit beidseitigen Verclipsungsstellen für einen Antriebshebel verwendet werden.

Eine derartige Klappe lässt noch Wünsche offen.

Es ist Aufgabe der Erfindung, eine verbesserte Klappe zur Verfügung zu stellen.

Diese Aufgabe wird gelöst durch eine Klappe mit den Merkmalen des Anspruchs 1. Vorteilhafte Ausgestaltungen sind Gegenstand der Unteransprüche.

Erfindungsgemäß ist eine Klappe vorgesehen, insbesondere bevorzugt für eine Kraftfahrzeug-Klimaanlage, an der mindestens eine Verclipsungsstelle ausgebildet ist, die durch einen Teil einer Clipsverbindung für das Anbringen eines Bauteils, insbesondere bevorzugt eines Betätigungshebels, mittels Verclipsen gebildet ist, wobei ein durch eine dünne Wand gebildeter, eine in der Klappe ausgebildete Durchgangsöffnung verschließender Bereich in der Nähe der Verclipsungsstelle angeordnet ist, und die dünne Wand von einem Ende des anzugeclipsenden Bauteils durchstoßen, also zumindest bereichsweise zerstört, wird. Eine derartige Ausgestaltung einer Klappe stellt sicher, dass Öffnungen, die insbesondere in Zusammenhang mit Clipsverbindungen stehen, im Falle des Nichtgebrauchs bei bestimmten Anwendungsfällen der Klappe durch eine dünne Wand verschlossen sind, so dass durch die Öffnungen keine Luft oder ein anderes durch die Klappe zu regelndes Medium strömen kann, d.h. keine Strömungsverluste auftreten. Besonders bevorzugt sind zwei an einander gegenüberliegenden Enden in der Nähe der Schwenkachse vorgesehene Öffnungen durch entsprechende dünne Wände verschlossen, so dass die Klappe für Einsatzzwecke verwendet werden kann, bei denen eine Betätigung mittels eines Betätigungshebels erfolgt, der einen Federarm mit einem verbreiterten Ende, insbesondere einem in einer Spitze endenden Kopf, aufweist, welcher von einer der beiden Seiten her eingeführt und eingeclipst wird, wobei im Rahmen des Einführens das Ende des Federarms die dünne Haut durchstoßen wird, was durch das Vorsehen eines spitz oder zumindest etwas sich verjüngend, insbesondere bevorzugt konisch, endenden Kopfes erleichtert werde kann.

Die Klappe oder der Klappengrundkörper ist bevorzugt aus einem thermoplastischen Kunststoff wie PP mit oder ohne Füllstoffe, ABS, PU, PA, PE, PET oder ähnlichen Materialien hergestellt insbesondere spritzgegossen.

Die dünne Wand ist vorzugsweise durch eine angespritzte Weichkomponente, wie beispielsweise einem elastischen oder elastomeren Kunststoff gebildet Vorteilhafterweise kann EPDM, SEBS, Silikon oder ähnliches als Material zum Einsatz kommen. Die Wandstärke der dünnen Wand liegt bevorzugt im Bereich zwischen 0,1 mm und 1 mm.

Dabei handelt es sich besonders bevorzugt bei der Klappe um eine Klappe mit mindestens einer Dichtlippe. Hierbei kann das Material der Dichtlippe auch für das Verschließen der Öffnung(en) im Bereich der vorbereiteten Verclipsungsstell(en) verwendet werden. Die Herstellung erfolgt dabei bevorzugt im Rahmen des Spritzgießens der Dichtlippe(n), so dass kein zusätzlicher Arbeitsgang erforderlich ist. Es ist lediglich ein entsprechend vorbereitetes Werkzeug und etwas mehr Dichtlippen-Material erforderlich.

Die der Verclipsungsstelle zugeordnete Durchgangsöffnung ist vorzugsweise durch die, durch eine dünne Haut gebildete Wand verschlossen, wobei die Wand in radialer Richtung zur Schwenkachse verläuft. Die Durchgangsöffnung ist hierbei bevorzugt koaxial zur Schwenkachse angeordnet.

Vorzugsweise ist die Verclipsungsstelle klappenseitig einer Lagerstelle für die Welle der Klappe angeordnet, d.h. die Lagerstelle ist nach außen versetzt zur der Verclipsungsstelle angeordnet. Dabei wird das an der Klappe anzubringende Bauteil vorzugsweise mit einem Bereich, insbesondere bevorzugt mit einem Bereich an dessen Ende der Federarm mit seinem Kopf ausgebildet ist, innen durch die Lagerstelle geführt Um im Bereich der Lagerstelle für eine ausreichende Stabilität der Welle zu sorgen, kann in diesem Bereich eine Verzahnung von Klappe und anzubringendem Bauteil vorgesehen sein, welche einen Kraftübertragungsbereich und zugleich auch eine Verdrehsicherung bildet, so dass möglichst kein Spiel zwischen dem Bauteil und der Klappe vorgesehen ist. Am klappenseitigen Ende oder in der Nähe des Endes des Kraftübertragungsbereichs ist bevorzugt die dünne Wand angeordnet, welche die Durchführung für den Federarm (und somit auch eine Seite des in der Klappe ausgebildeten Kraftübertragungsbereichs) verschließt.

Die Klappe ist bevorzugt spiegelbildlich zur Mittelquerebene der Klappe angeordnet, d.h. die Klappe kann bspw. sowohl für die rechte Seitendüse als auch für die linke Seitendüse oder für rechts und linksgelenkte Fahrzeuge mit spiegelbildlicher Ausgestaltung bezüglich der Fahrzeugmittellängsebene verwendet werden.

Vorzugsweise weist die dünne Wand eine Sollbruch- und/oder Solldurchstoßstelle auf, in welcher zumindest bereichsweise das Material dünner ausgebildet ist. Diese Stelle erleichtert das Einführen des anzubringenden Bauteils. Ferner werden unerwünschte Bruchstellen, bspw. ganz auf einer Seite, welche zu einer Behinderung der Clipsverbindung in Folge von mitgenommenen Wandfetzen führen könnten, ausgeschlossen. Zudem können die Reste der durchstoßenen, dünnen Wand auch etwas zur Abdichtung der Klappe gegenüber dem angebrachten Bauteil beitragen, insbesondere wenn die Rissbildung definiert erfolgt und beispielsweise an einer vorbestimmten Stelle endet, so dass im eingeclipsten Zustand der Hebelarm eng umschlossen von dem vorzugsweise elastischen Material der dünnen Wand ist.

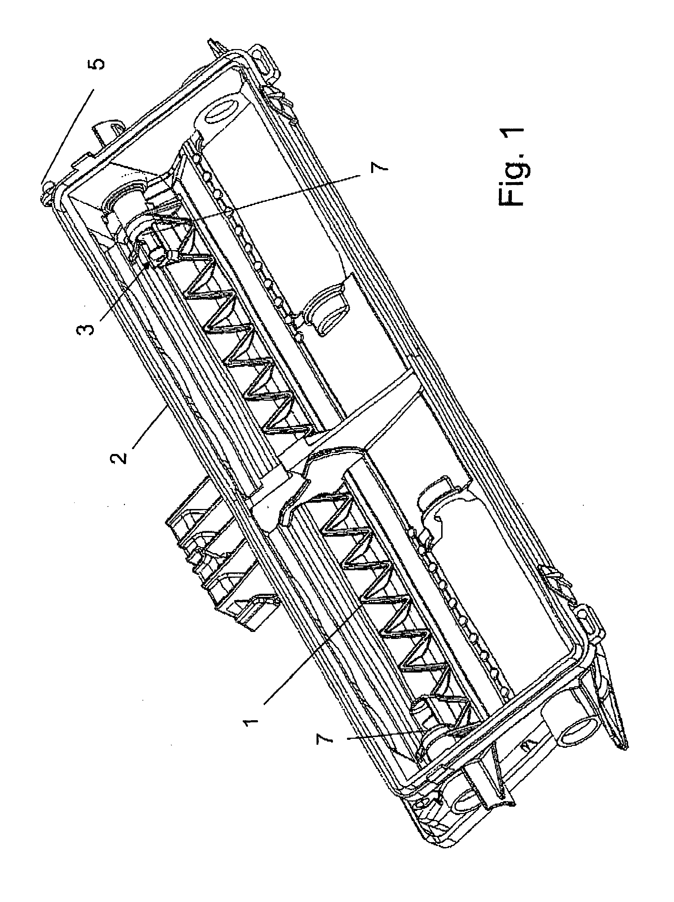

Im Folgenden wird die Erfindung anhand eines Ausführungsbeispiels unter Bezugnahme auf die beiliegende Zeichnung näher erläutert. Hierbei zeigen
- Fig. 1: eine perspektivische Ansicht einer erfindungsgemäßen Klappe, welche in einem teilweise dargestellten Gehäuse angeordnet ist, gemäß dem Ausführungsbeispiel,

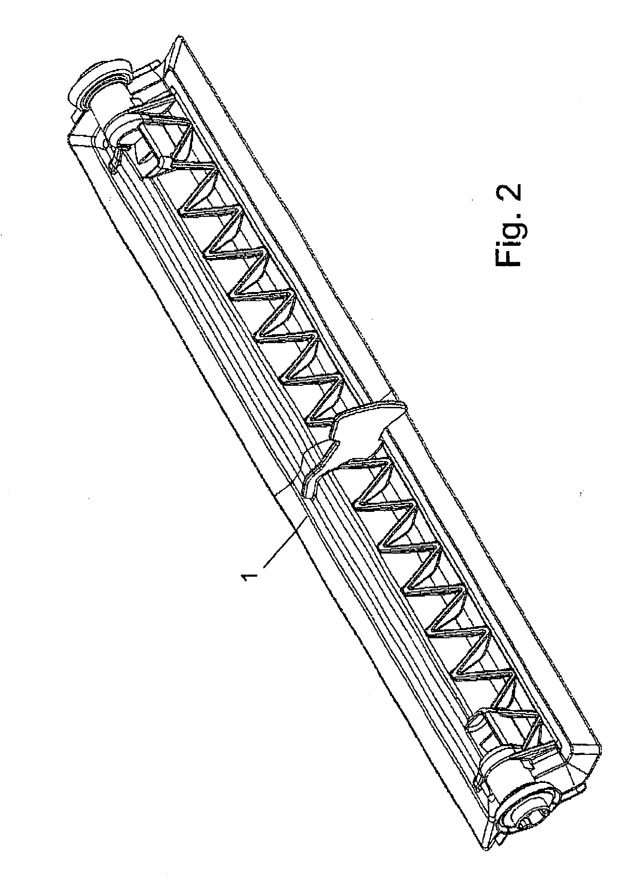

- Fig. 2: eine perspektivische Ansicht der Klappe von Fig. 1,
- Fig. 3: eine vergrößerte Ansicht eines Endes der Klappe von Fig. 1 und dem Betätigungshebel vor dem Einsetzen des Betätigungshebels,

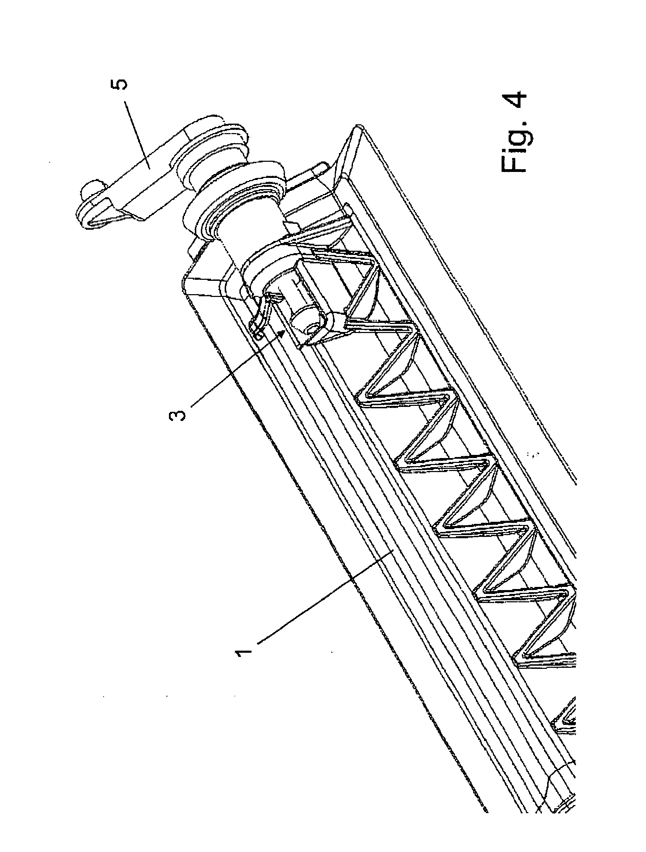

- Fig. 4: eine Fig. 3 entsprechende Darstellung nach dem Einsetzen des Betätigungshebels,

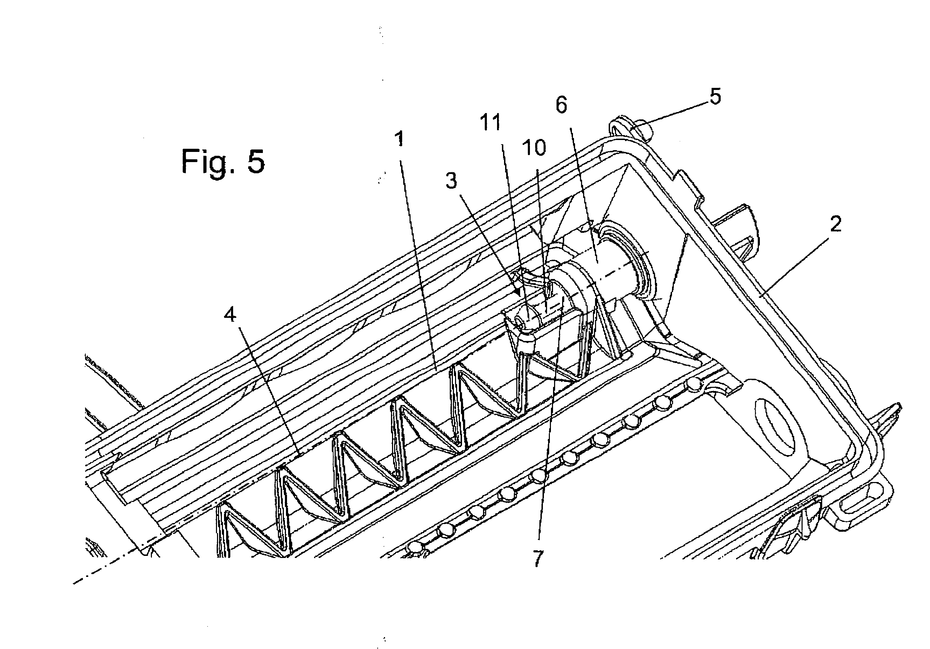

- Fig. 5: eine Detailansicht von Fig. 1.
- Fig. 6: eine perspektivische Detailansicht des Endes der Klappe von Fig. 1 vor dem Einsetzen des Betätigungshebels, und
- Fig. 7: eine Fig. 6 entsprechende, aufgerissene Darstellung des Endbereichs der Klappe vor dem Einsetzen des Betätigungshebels.

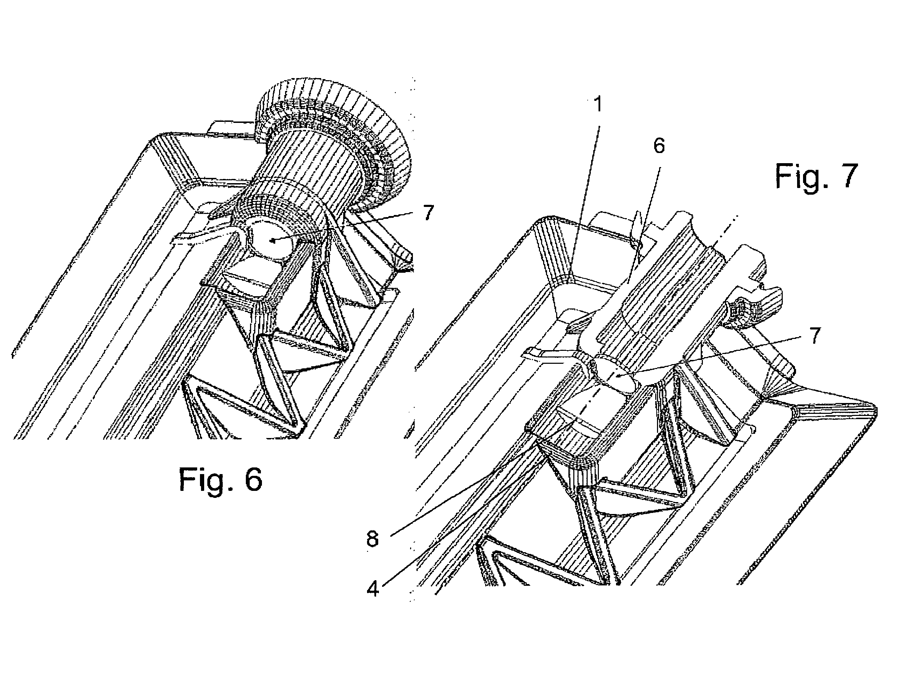

Eine Klappe 1 zur Regelung eines Luftstroms in einer Kraftfahrzeug-Klimaanlage, von der in der Zeichnung nur jeweils ein kleiner Ausschnitt des Gehäuses 2 dargestellt ist, ist mittels einer Clipsverbindung 3 auf einer Seite ihrer Welle 4 mit einem Betätigungshebel 5 drehsteif verbunden, wobei der Betätigungshebel 5 sich im Wesentlichen außerhalb des Gehäuses 2 erstreckt. Um die Klappe 1 gegenüber dem Gehäuse 2 in ihren Endstellungen abzudichten, sind an der Klappe 1 Dichtlippen (nicht näher hervorgehoben, jedoch in der Schnittdarstellung von Fig. 7 am Ende der Welle 4 ersichtlich) ausgebildet, welche durch ein elastisches Material gebildet sind, so dass sie sich im Bereich der Lagerstellen und in der entsprechenden Endstellung der Klappe 1 im Bereich der Klappenflächenränder abdichtend an entsprechenden, am Gehäuse 2 ausgebildeten Anlageflächen anlegen.

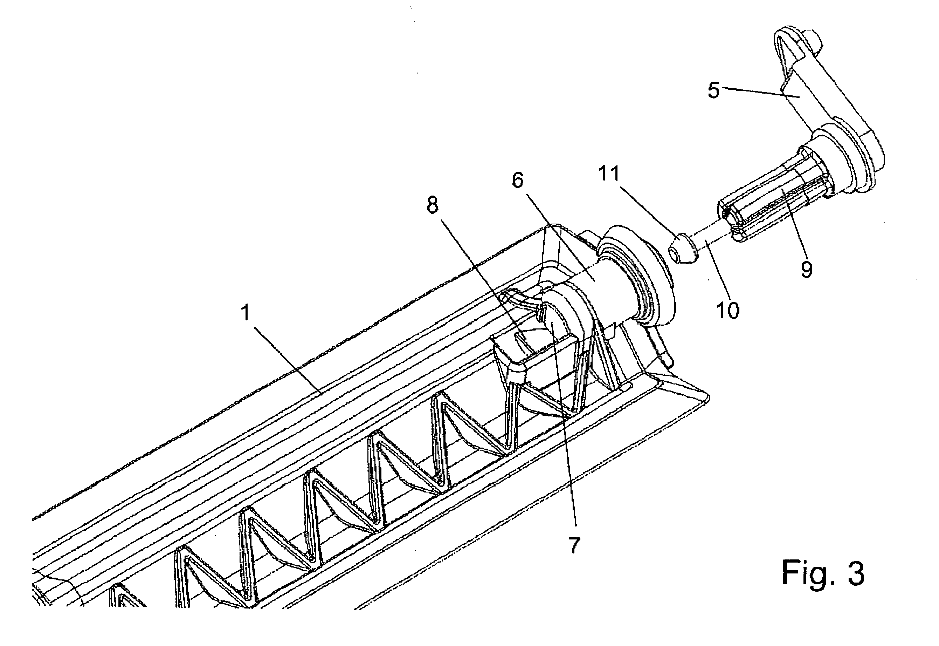

Die Welle 4 ist beidseitig im Gehäuse 2 in ihren Endbereichen auf an sich bekannte Weise gelagert. Um eine flexibel verwendbare Klappe 1 zur Verfügung zu stellen, welche vorliegend sowohl bei links- als auch rechtsgelenkten Fahrzeugen verwendet werden kann, wobei sich die beiden Varianten in Hinblick auf die Klappe 1 nur dadurch unterscheiden, dass der Betätigungshebel 5 bei der einen Variante auf der rechten Seite, wie in der Zeichnung dargestellt, und bei der anderen Variante auf der linken Seite angebracht ist, sind beide Wellenenden hülsenartig ausgebildet, wobei der hülsenartige Bereich 6 klappenseitig durch eine dünne Haut, im Folgenden als dünne Wand 7 bezeichnet, gebildet aus dem gleichen elastomeren Material wie die Dichtlippe, verschlossen ist (siehe Fig. 3). Klappenseitig des verschlossenen hülsenartigen Bereichs 6 ist eine Art Sägezahn 8 ausgebildet, welcher eine Hinterschneidung für die Clipsverbindung 3 mit dem Betätigungshebel 5 zur Verfügung stellt. Der hülsenartige Bereich 6 ist, um eine drehstarre Verbindung von Betätigungshebel 5 und Klappe 1 sicherzustellen, eine Art Innenverzahnung (siehe Fig. 7) als Aufnahmen für einen Kraftübertragungsbereich 9 des Betätigungshebels 5 (siehe Fig. 3) ausgebildet. Der Kraftübertragungsbereich 9 weist hierfür ein entsprechendes Außenprofil auf, vorliegend gebildet durch drei sich in radialer Richtung nach außen erstreckende Zähne. Klappenseitig des Kraftübertragungsbereichs 9 ist der federarmartige Teil der Clipsverbindung 3 in Form eines zylinderförmigen Bereichs 10, welcher den Federarm bildet, und eines Kopfes 11, welcher in die Hinterschneidung, gebildet durch das klappenseitige Ende des Sägezahns 8, eingreift. Der Kopf 11 ist konisch ausgebildet, wobei er sich zur Klappe hin verjüngt, ggf. kann er auch in einer Art Spitze enden, um beim Einsetzen des Betätigungshebels 5 ein Durchstoßen der dünnen Wand 7 zu erleichtern. Da die dünne Wand 7 nur auf der Seite durchstoßen wird, auf welcher der Betätigungshebel 5 angebracht ist, verbleibt die entsprechende Stelle auf der anderen Seite luftdicht verschlossen.
Die Herstellung der Klappe 1 erfolgt folgendermaßen: Zuerst wird der Klappengrundkörper, bestehend aus einem ersten Kunststoffmaterial, vorliegend einem Thermoplast auf an sich bekannte Weise mittels Spritzgießens hergestellt. Anschließend werden, in einem anderen Werkzeug, in einem zweiten Arbeitsschritt die Dichtlippen und die dünne Wand 7 aus einem zweiten Kunststoffmaterial, vorliegend einem thermoplastischen Elastomer, welches weicher als das ersten Kunststoffmaterial ist, an dem Klappengrundkvrper angespritzt, wodurch die fertig ausgebildete Klappe 1 entsteht. Bei der Montage wird zuerst die Klappe 1 in das Gehäuse 2 eingesetzt. Anschließend wird der Betätigungshebel 5 mit seinem einen Hebelende in Längsrichtung der Welle 4 in den hülsenartigen Bereich 6 eingeführt, wobei der Kopf 11 die dünne Wand 7 durchstößt und anschließend durch den Sägezahn 8 seitlich verschoben wird, bevor er wieder in seine gerade Ausrichtung zurückfedert, sobald er das Ende des Sägezahns 8 überschritten hat.

Um neben einer sicheren Kraftübertragung ohne dem Erreichen gefährlich hoher Druckbelastungen auch eine möglichst einfache Montage zu ermöglichen, ist der Kraftübertragungsbereich 9 länger ausgebildet als der federarmartige Teil der Clipsverbindung 3, wodurch eine korrekte Ausrichtung des Betätigungshebels 5 vor einem Durchstoßen der dünnen Wand 7 bewirkt wird.

## Patentansprüche

1. Klappe, insbesondere für eine Kraftfahrzeug-Klimaanlage, an der mindestens eine Verclipsungsstelle ausgebildet ist, die durch einen Teil einer Clipsverbindung für das Anbringen eines Bauteils, insbesondere eines Betätigungshebels (5), mittels Verclipsen gebildet ist, **dadurch gekennzeichnet, dass** ein durch eine dünne Wand (7) gebildeter, eine in der Klappe (1) ausgebildete Durchgangsöffnung verschließender Bereich in der Nähe der Verclipsungsstelle angeordnet ist, wobei die dünne Wand (7) von einem Ende des anzuclipsenden Bauteils zu durchstoßen ist.

2. Klappe nach Anspruch 1, **dadurch gekennzeichnet, dass** die dünne Wand (7) durch eine angespritzte Weichkomponente gebildet ist.

3. Klappe nach Anspruch 2, **dadurch gekennzeichnet, dass** die Weichkomponente aus dem gleichen Material wie eine Dichtlippe besteht, welche an der Klappe (1) ausgebildet ist.

4. Klappe nach einem der vorhergehenden Ansprüche, **dadurch gekennzeichnet, dass** mindestens zwei Verclipsungsstellen vorgesehen sind, wobei an mindestens einer Verclipsungsstelle ein Bauteil angebracht ist und mindestens eine andere Verclipsungsstelle ungenutzt ist, so dass die dünne Wand (7) im Bereich dieser anderen Verclipsungsstelle unbeschädigt ist.

5. Klappe nach einem der vorhergehenden Ansprüche, **dadurch** gelcennzeichnet, dass die der Verclipsungsstelle zugeordnete Durchgangsöffnung durch die, durch eine dünne Haut gebildete Wand (7) verschlossen ist, wobei die Wand (7) in radialer Richtung zur Schwenkachse verläuft.

6. Klappe nach einem der vorhergehenden Ansprüche, **dadurch gekennzeichnet, dass** die Verclipsungsstelle klappenseitig einer Lagerstelle für die Welle der Klappe (1) angeordnet ist.

7. Klappe nach einem der vorhergehenden Ansprüche, **dadurch gekennzeichnet, dass** die Klappe (1) spiegelbildlich zur Mittelquerebene der Klappe (1) angeordnet ist.

8. Klappe nach einem der vorhergehenden Ansprüche, **dadurch gekennzeichnet, dass** die dünne Wand (7) eine Sollbruch- und/oder Solldurchstoßstelle aufweist, in welcher zumindest bereichsweise das Material dünner ausgebildet ist.

9. Klappenanordnung **gekennzeichnet durch** eine Klappe nach einem der Ansprüche 1 bis 8 und **durch** einen an der Klappe (1) angeclipsten Betätigungshebel (5), wobei der Betätigungshebel (5) einen an einem Ende ausgebildeten Federarm aufweist.

10. Klappenanordnung nach Anspruch 9, **dadurch gekennzeichnet, dass** der Betätigungshebel (5) am Ende des Federarms einen Kopf (11) aufweist, dessen Querschnitt sich in Einführrichtung verjüngt.
